# FASCICULE DE BREVET EUROPEEN

(11) **EP 0 857 260 B1**
(45) Date de publication et mention de la délivrance du brevet: **21.05.2003**
(21) Numéro de dépôt: 97940194.0
(22) Date de dépôt: 08.09.1997
(51) Int. Cl.: F16D 13/58, F16D 13/50

(54) **MECANISME D'EMBRAYAGE POUR EMBRAYAGE A FRICTION A FAIBLE EFFORT DE DEBRAYAGE**
KUPPLUNGSMECHANISMUS FÜR EINE REIBKUPPLUNG MIT VERRINGERTEM LÖSEKRAFTAUFWAND
CLUTCH MECHANISM FOR FRICTION CLUTCH WITH LOW CLUTCHING FORCE

(30) Priorité: 06.09.1996 FR 9611009
(43) Date de publication de la demande: 12.08.1998
(73) Titulaire: VALEO EMBRAYAGES, 80009 Amiens Cedex 1 (FR)
(72) Inventeur: BACHER, Michel, F-95580 Andilly (FR)
(74) Mandataire: Gamonal, Didier
(86) Numéro de dépôt international: FR9701579
(87) Numéro de publication internationale: WO98010202

(56) Documents cités:
- EP-A- 0 228 310
- EP-A- 0 779 446
- WO-A-97/19275
- DE-A- 4 311 286
- DE-A- 4 326 501
- DE-A- 4 407 260
- FR-A- 2 721 669

## Description

La présente invention concerne les embrayages à friction à faible effort de débrayage, notamment pour véhicules automobiles, et se rapporte plus particulièrement au mécanisme d'embrayage que comporte un tel embrayage.

Ainsi qu'on le sait dans un embrayage classique, intercalé entre un arbre menant et un arbre mené, un diaphragme prend appui sur le fond d'un couvercle, fixé à un volant d'entraînement en rotation, pour déplacer un plateau de pression en direction dudit volant, formant plateau de réaction, afin de serrer les garnitures de friction d'une friction d'embrayage entre lesdits plateaux de pression et de réaction.

Le volant d'entraînement est solidaire d'un premier arbre, tel qu'un arbre menant, tandis que la friction d'embrayage présente à sa périphérie interne un moyeu pour son calage en rotation sur un deuxième arbre, tel qu'un arbre mené.

L'embrayage est donc normalement engagé (embrayé) avec transmission de couple entre les arbres menant et mené.

Pour désengager (débrayer) l'embrayage il faut, à l'aide d'une butée de débrayage, agir axialement en poussant, dans le cas d'un embrayage du type poussé, sur l'extrémité interne des doigts du diaphragme pour faire pivoter ledit diaphragme et annuler l'effort qu'exerce ce diaphragme sur le plateau de pression mobile axialement afin de libérer les garnitures de friction.

Le couple n'est alors plus transmis de l'arbre menant à l'arbre mené car les garnitures de friction ne sont plus serrées entre les plateaux de pression et de réaction solidaires en rotation du couvercle.

Usuellement le couvercle, le plateau de pression et le diaphragme forment un ensemble unitaire appelé mécanisme d'embrayage que l'on vient rapporter par son couvercle sur le volant, des languettes élastiques liant en rotation, avec mobilité axiale, le plateau de pression avec le couvercle.

Le diaphragme, ainsi qu'on le sait, est troué centralement et comporte une partie périphérique externe en forme de rondelle Belleville prolongée vers l'intérieur par une partie centrale fragmentée en doigts radiaux par des fentes. Ce diaphragme par sa partie rondelle Belleville prend appui sur le couvercle et sur le plateau de pression. Ainsi le dispositif débrayeur de l'embrayage, qui permet de contrecarrer à volonté l'action des moyens élastiques embrayeurs, est constitué par les doigts du diaphragme sur l'extrémité interne desquels agit la butée de débrayage, tandis que la rondelle Belleville du diaphragme constitue des moyens élastiques embrayeurs à action axiale pour serrer les garnitures de friction entre les plateaux de pression et de réaction et donc solliciter axialement le plateau de pression en direction opposée au fond du couvercle.

A l'état libre ce diaphragme a une forme tronconique. Une fois monté dans l'embrayage sa rondelle Belleville est montée sous précontrainte et est plus au moins aplatie. Lors de l'opération de débrayage (désengagement de l'embrayage) on modifie la conicité de sa rondelle Belleville.

Ainsi qu'on le sait la courbe caractéristique de ce diaphragme (force exercée - déflexion), par exemple ramenée au niveau de l'extrémité interne des doigts du diaphragme, est déterminée par les dimensions de sa rondelle Belleville et par le rapport entre la hauteur du tronc de cône de la rondelle Belleville à l'état libre et l'épaisseur du diaphragme.

Cette courbe caractéristique passe par un maximum.

Ainsi la force à exercer sur l'extrémité interne des doigts du diaphragme augmente jusqu'à un maximum, diminue graduellement jusqu'à un minimum, puis remonte.

La différence entre le maximum et le minimum peut être importante. Pour plus de précisions sur cette courbe caractéristique on se reportera par exemple aux documents FR-A-1 392 569 ou WO 97/19275, ainsi qu'aux figures 4 et 5 montrant respectivement la hauteur H du tronc de cône d'une rondelle Belleville et ladite courbe avec en ordonnée la charge exercée et en abscisse sa déflexion.

Dans le document FR-A-1 392 569, on a prévu un dispositif élastique de progressivité pour éviter de passer par le maximum précité lors de la course de débrayage. Ce dispositif est monté en série avec la rondelle Belleville du diaphragme et présente une force élastique notablement inférieure à celle de la rondelle Belleville. Ce dispositif a une course limitée entre une position de précontrainte où sa force est maximum et une position de contrainte où sa force est minimum.

Avec cette disposition on obtient un effort de débrayage globalement croissant au niveau de la butée de débrayage.

On ne peut obtenir une assistance lors de la course de débrayage aussi grande que souhaitée car le dispositif de progressivité diminue la charge exercée par le diaphragme sur le plateau de pression lorsque l'embrayage est engagé.

On peut alors songer à faire intervenir un ressort d'assistance en parallèle avec le diaphragme.

Dans ce cas le ressort d'assistance, par exemple en forme de rondelle Belleville, peut prendre appui sur le couvercle et sur l'extrémité interne des doigts du diaphragme.

En position embrayage engagé, il peut alors exercer une force minimum, puis sa conicité variant, exercer une force d'assistance lors de l'opération de débrayage. Il faut donc que cette force d'assistance soit minimum en position embrayage engagé tout au long de la durée de vie de l'embrayage.

L'idéal pour ce type de réalisation est de faire appel à un dispositif de réglage, dit rattrapeur d'usure, qui maintient le diaphragme toujours globalement dans la même position quelle que soit l'usure des garnitures de friction de l'embrayage et/ou des faces de friction des plateaux de pression et de réaction pour que le ressort d'assistance exerce, en toute circonstance lors de la durée de vie de l'embrayage, une très faible force lorsque l'embrayage est en position engagée ou embrayée. L'obtention de l'assistance n'est donc pas aussi simple que souhaitée.

La présente invention a pour objet de pallier ces inconvénients et donc de créer, de manière simple et économique, un embrayage à friction à faible effort de débrayage faisant appel à des ressorts agissant en série sans diminuer tout au long de la durée de vie de l'embrayage notablement la force de serrage des garnitures de friction à l'état embrayage engagé.

Suivant l'invention un mécanisme d'embrayage du type sus-indiqué est caractérisé en ce que lesdits moyens élastiques embrayeurs comportent deux rondelles Belleville montées en série entre la face dorsale du plateau de pression et un appui de manoeuvre porté par le dispositif débrayeur, à savoir une première rondelle Belleville adjacente au plateau de pression et une seconde rondelle Belleville adjacente au dispositif débrayeur, et en ce que le dispositif débrayeur est monté à sa périphérie externe de manière pivotante sur un appui primaire porté par le fond du couvercle radialement au-dessus de l'appui de manoeuvre, lui-même implanté radialement au-dessus d'un appui secondaire porté par le fond du couvercle pour contact avec le dispositif débrayeur et définition d'une position de référence pour celui-ci.

Grâce à l'invention et à l'appui secondaire, en position embrayage engagé le dispositif débrayeur a toujours la même position sans avoir besoin d'un rattrapeur d'usure comme mentionné ci-dessus.

Cette position de référence favorise la manoeuvre de l'embrayage à l'aide d'une butée de débrayage commandée par un actuateur hydraulique ou électromécanique.

La force de débrayage pour désengager l'embrayage à l'aide de la butée de débrayage est faible.

Ceci est dû notamment à la disposition des appuis de manoeuvre et primaire.

En effet, par exemple la distance entre l'appui de manoeuvre et l'appui primaire peut être dix fois moins grande que la distance entre l'appui primaire et la zone d'appui de la butée de débrayage. Ainsi on obtient de grands leviers et une grande démultiplication, l'effort à exercer par la butée de débrayage pour désengager l'embrayage étant par exemple dix fois moins grand que l'effort d'embrayage exercé par la rondelle Belleville concernée sur l'appui de manoeuvre en position embrayage engagé.

On appréciera que, comme dans un embrayage du type tiré, l'appui primaire de basculement du dispositif débrayeur est implanté radialement au-dessus de l'appui qu'offre le plateau de pression aux moyens élastiques embrayeurs.

Le couvercle subit donc moins de déformations que celui d'un embrayage poussé du type classique dans lequel le diaphragme est monté pivotant, par exemple à l'aide de colonnettes, sur le fond du couvercle au niveau de la périphérie interne dudit fond. Ce couvercle a donc une forme simplifiée puisqu'il est dépourvu de colonnettes.

Les frottements sont également diminués compte tenu de l'absence des colonnettes. Grâce à l'invention on peut rattraper les usures des garnitures de friction.

Les rondelles Bellevilles peuvent être des rondelles Bellevilles conventionnelles ou des rondelles Bellevilles présentant des doigts à leur périphérie externe ou interne en fonction des caractéristiques souhaitées pour chaque application.

Suivant une caractéristique de l'invention on détruit à l'aide du dispositif débrayeur un équilibre créé par les rondelles Belleville montées en série . En effet les rondelles Belleville sont dimensionnées pour être en équilibre pour la position embrayage engagé. Avec toutes ces dispositions on obtient un effort de débrayage croissant au niveau de la butée de débrayage comme dans le document FR-A-1 392 569, tout en ayant une position de référence pour le dispositif débrayeur.

Grâce à l'invention on conserve les avantages des solutions antérieures précitées sans en avoir les inconvénients.

Ce dispositif débrayeur de forme annulaire consiste avantageusement en un faux diaphragme avec une partie périphérique de forme annulaire de faible hauteur prolongée par une partie principale de grande longueur fragmentée en doigts radiaux.

La charge exercée par la partie annulaire est très faible, voire nulle par rapport à la charge exercée par les rondelles Belleville. Pour ce faire on peut doter cette partie annulaire de fentes borgnes débouchant à sa périphérie externe.

La charge exercée par le dispositif débrayeur sur les rondelles Belleville est donc négligeable. On n'a donc pas tous les problèmes liés à un ressort d'assistance délestant les moyens élastiques embrayeurs.

On peut donner si besoin est une certaine élasticité à cette rondelle périphérique, pour par exemple améliorer le confort au niveau de la pédale de débrayage commandant le déplacement de la butée de débrayage et pour assurer un rappel de la butée de débrayage en toute circonstance. Du fait de la configuration du dispositif débrayeur, on peut réaliser l'appui de manoeuvre par emboutissage car on ne retrouve pas les problèmes de contraintes mécaniques que présente le diaphragme au niveau de la périphérie interne de sa rondelle Belleville dans sa zone de raccordement avec les doigts. Cet appui peut être raccordé par un autre embouti dirigé axialement en sens inverse par rapport à l'appui de manoeuvre.

On peut ainsi, grâce à cet embouti supplémentaire, retenir radialement voire même centrer la rondelle Belleville s'appuyant sur le dispositif débrayeur.

Avantageusement l'appui primaire est décalé axialement en direction du plateau de pression par rapport à l'appui secondaire pour notamment réduire l'encombrement axial et avoir une bonne position de référence. Ainsi la partie périphérique annulaire du dispositif débrayeur est décalée axialement par rapport à sa partie principale en direction du plateau de pression.

Avantageusement les rondelles Belleville inclinées en sens inverse sont du type positif et négatif.

La rondelle Belleville positive, dans une forme de réalisation, s'appuie par sa périphérie externe sur l'appui de manoeuvre et a une charge qui croît lorsque la hauteur de son tronc de cône diminue.

La rondelle Belleville négative s'appuie à sa périphérie externe sur le plateau de réaction et a une charge qui diminue lorsque la hauteur de son tronc de cône diminue.

Bien entendu on peut inverser les structures ; les rondelles Bellevilles convergeant l'une vers l'autre à leur périphérie externe.

La rondelle Belleville positive a une action prépondérante par rapport à la rondelle Belleville négative, elle tend lors de l'opération de débrayage à s'ouvrir et à refermer la rondelle Belleville négative. Ces rondelles Belleville peuvent être de charge voisine.

Par exemple la raideur de la rondelle Belleville positive est plus grande que celle de la rondelle Belleville négative.

Ainsi lors de l'opération de débrayage le dispositif débrayeur quitte son appui secondaire pour, par l'intermédiaire de son appui de manoeuvre, actionner la rondelle Belleville positive, qui du fait de sa raideur plus élevée, tend à écraser la rondelle négative.

Pour un même déplacement, la charge de la rondelle Belleville négative décroît moins rapidement que celle de la rondelle Belleville positive en sorte qu'un nouvel équilibre se crée, sachant que la rondelle Belleville positive a alors une hauteur de tronc de cône qui augmente, tandis que celui de la rondelle négative diminue. La rondelle Belleville positive s'ouvre moins que ne se referme la rondelle Belleville négative en sorte que la hauteur totale des rondelles Belleville diminue.

Dans le sens du réembrayage l'inverse se produit, la charge exercée par la rondelle Belleville négative croissant moins rapidement que celle de la rondelle Belleville négative pour un même déplacement.

Ainsi on peut moduler le déplacement du plateau de pression ainsi que la charge exercée sur celui-ci lors des phases d'embrayage et de débrayage.

On peut donc contrôler la charge de celui-ci à chaque instant.

Ainsi la butée de débrayage peut être commandée manuellement ou par un actuateur de forme simple du type hydraulique ou électromécanique de forme simple. Par exemple l'actuateur du type électromécanique peut comporter un moteur électrique entraînant un train d'engrenage, une roue dentée et une vis sans fin permettant de déplacer axialement la butée de débrayage. L'actuateur est dépourvu de moyen élastique d'assistance. On notera que les languettes élastiques assurent en final un décollement du plateau de pression par rapport à la friction d'embrayage.

Dans une forme de réalisation la rondelle Belleville positive développe en valeur absolue un effort maximal (voir sommet de la courbe de la figure 5) supérieure à celui développé par la rondelle Belleville négative. En variante pour diminuer la course de débrayage et le temps de débrayage on surdimensionne la rondelle Belleville positive par rapport à la rondelle négative tout en ayant un équilibre pour la position embrayage engagé.

Des moyens sont prévus pour éviter le retournement de la rondelle Belleville. Ainsi dans une forme de réalisation avantageusement le plateau de pression présente dorsalement une butée pour limiter l'inclinaison de la rondelle Belleville négative et éviter que celle-ci ne se retourne avant la fin de l'opération de débrayage pour éviter tout réembrayage.

Ainsi la rondelle Belleville négative est montée sous précontrainte lorsque l'embrayage est désengagé et il en est de même de la rondelle Belleville positive.

Des crochets de rappel sont portés par le plateau de pression pour que la rondelle Belleville négative soit de manière permanente en contact avec le plateau de pression lors de l'opération de réembrayage et de débrayage.

La description qui va suivre illustre l'invention en regard des dessins annexés dans lesquels :
- la figure 1 est une demi-vue en coupe axiale d'un embrayage selon l'invention en position embrayage engagé ;
- les figures 2 et 3 sont des vues analogues à la figure 1 montrant l'embrayage respectivement en cours de l'opération de débrayage, et en position embrayage désengagé ;
- la figure 4 est une vue montrant une rondelle Belleville avec son tronc de cône ;
- la figure 5 est une vue montrant la courbe caractéristique (charge exercée déflexion) d'une rondelle Belleville.
- la figure 6 est une demie vue partielle schématique analogue à la figure 1 pour un autre exemple de réalisation.

L'embrayage du type poussé représenté dans les figures comporte un ensemble de pièces de forme annulaire, à savoir successivement axialement un volant 1 d'entraînement en rotation pour fixation de l'embrayage à un premier arbre, tel qu'un arbre menant, une friction d'embrayage 2 présentant à sa périphérie externe des garnitures de friction 20,21 et à sa périphérie interne un moyeu 22 pour liaison en rotation de l'embrayage avec un second arbre, tel qu'un arbre mené, un plateau de pression 3, une première rondelle Belleville 4, un jonc d'appui 5, une seconde rondelle Belleville 6 inclinée en sens inverse par rapport à la première rondelle Belleville 4, un dispositif débrayeur 7 de forme annulaire, un couvercle 8 de forme creuse présentant un fond 80 globalement d'orientation transversale troué centralement et à sa périphérie externe des moyens de fixation 81 pour fixation du couvercle 8 au volant 1 formant plateau de réaction. Les rondelles Belleville 4,6 ont ici des charges voisines.

Le volant 1 présente dorsalement une face de friction 10 et est représenté ici partiellement, sachant que de manière connue il présente centralement des trous pour sa fixation à l'aide de vis à l'arbre menant. Ici le volant 1 est d'un seul tenant en étant en matière moulable tout comme le plateau de pression 3 présentant frontalement une face de friction 30 en regard de la face de friction 10 du volant 1.

Le volant 1 et le plateau de pression 3 sont ici en fonte ou tout autre matière adaptée aux frottement à sec.

La friction d'embrayage 2 présente également un disque de support 23 pour porter les garnitures de friction 20,21, éventuellement fractionnées. Ces garnitures 20,21 s'étendent de part et d'autre du disque de support 23 en étant fixées à celui-ci par exemple par rivetage. Ici les garnitures 20,21 sont fixées par collage ou brasage au disque de support 23 métallique.

Des moyens élastiques de progressivité 24 à action axiale sont interposés entre les deux garnitures 20,21 pour serrage progressif de celles-ci entre le volant 1 et le plateau de pression 3. Ces moyens peuvent avoir toute forme appropriée. Ici ces moyens 24 sont réalisés en conformant le disque de support 23. Ce disque, à titre non limitatif, peut présenter une partie centrale pour sa liaison de manière élastique ou non au moyeu 22 et une partie périphérique fragmentée en pales radiales par exemple du type tripode. Chaque pale présente alors une zone centrale de portée destinée à la fixation de l'une des garnitures de friction 20,21 et deux zones périphériques externes de portée destinées à coopérer avec l'autre des garnitures de friction 21,20.

Les zones de portée sont décalées axialement par rapport à la partie centrale du disque 23, la zone centrale de portée, de grande étendue, étant reliée à ladite partie centrale par un pli tangentiel, tandis que les zones de portées périphériques sont reliées à ladite zone centrale de portée par des plis obliques. Pour plus de précisions on se reportera au document US-A-5,452,783 montrant également un mode de réalisation avec des garnitures de friction fractionnées en plots.

Ainsi on minimise les phénomènes d'incrustation des garnitures de friction en sorte que la courbe caractéristique (charge exercée en fonction de la déflexion) des moyens élastiques de progressivité varie moins dans le temps.

Comme mentionné ci-dessus le disque 23 peut être accouplé de manière élastique au moyeu 22.

En variante le disque 23 est accouplé de manière rigide au moyeu 22, le volant 1 étant alors divisé pour présenter deux masses accouplées de manière élastique entre elles par des ressorts à action circonférentielle ou radiale.

En variante le volant 1 peut être en deux parties et comporter un flasque de support fixé à sa périphérie interne à l'arbre menant et à sa périphérie externe à un plateau de réaction présentant la face de friction 10. Le couvercle 8 peut être alors assemblé au volant 1 en deux parties à l'aide de pattes d'orientation axiale issues de sa jupe périphérique cylindrique 82. Ces pattes, en forme de tenons sont alors engagées dans des mortaises formées à la périphérie externe du plateau de réaction ou du flasque de support. Le tronçon libre des pattes, formant les moyens de fixation 81 précités du couvercle 8, peut être fixé par sertissage, rabattement ou soudage au flasque ou au plateau de réaction, comme décrit par exemple dans la demande de brevet français 95 12523 déposée le 24 octobre 1995 et publié sous le numéro 2741917.

Ici le couvercle 8 a une forme classique d'assiette creuse et les moyens de fixation 81 consistent en un rebord radial du couvercle 8, dirigé radialement en direction opposée à l'axe de symétrie axial de l'embrayage, ledit rebord 81 étant doté de trous non visibles pour montage d'organes de fixation, tels que des vis ou en variante des rivets, du rebord 81 au volant 1.

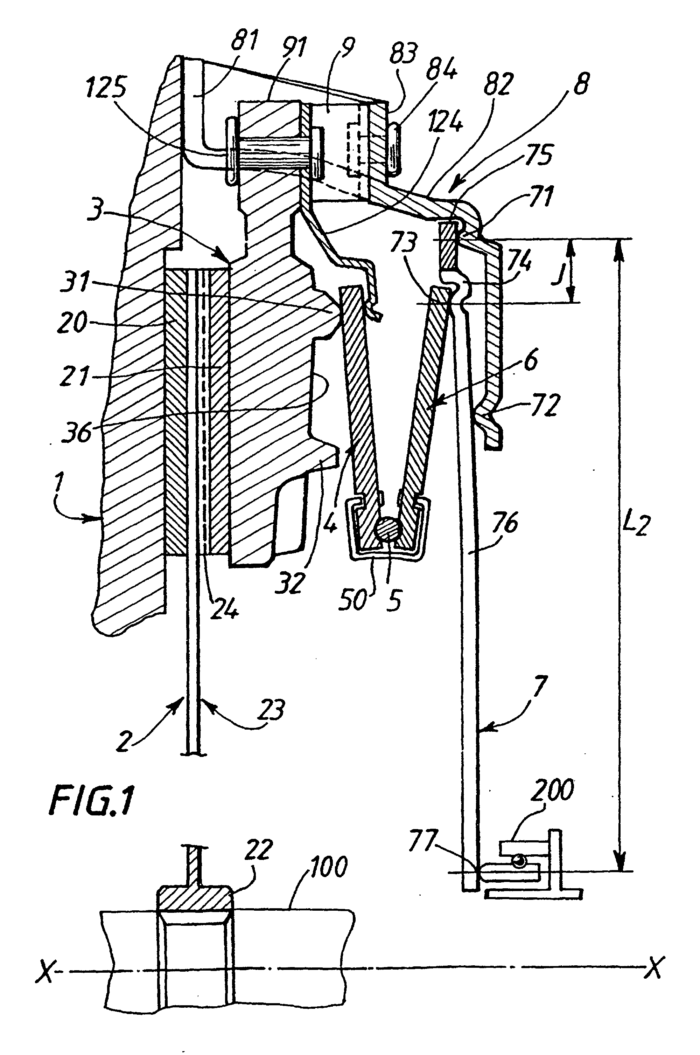

S'agissant d'une application pour véhicule automobile l'arbre menant est ici l'arbre moteur du véhicule sur le vilebrequin duquel se fixe le volant 1, tandis que l'arbre mené consiste en l'arbre d'entrée de la boîte de vitesses représenté partiellement en 100 à la figure 1.

Bien entendu il est possible d'inverser les structures, le premier arbre pouvant être un arbre mené et le deuxième arbre un arbre menant.

Dans ces figures le plateau de pression 3 est lié en rotation avec le couvercle 8 par des languettes élastiques 9 permettant au plateau de pression 3 de se déplacer axialement par rapport au couvercle 8.

Le plateau de pression 3 est donc solidaire en rotation du couvercle 8 et du volant 1, tout en étant mobile axialement par rapport à ceux-ci.

Les languettes 9 sont ici d'orientation tangentielle et sollicitent le plateau de pression 3 en direction du fond 80 du couvercle. Ces languettes 9 élastiques sont donc à action axiale et ont une action de rappel. En variante les languettes peuvent être inclinées ou d'orientation radiale tout en conservant une action axiale.

Ici la jupe cylindrique externe 82 du couvercle 8, reliant le fond 80 au rebord radial de fixation 81, est trouée localement pour passage de pattes 91, que présente en saillie radiale le plateau de pression 3. Les languettes 9 tangentielles sont fixées à l'une de leurs extrémités aux pattes 91 et à leur autre extrémité à une plage radiale 83 du couvercle (figure 1). Ces languettes 9 sont réparties régulièrement circonférentiellement, de manière connue, leur nombre, ainsi que celui des pattes 91, dépend des applications, sachant que pour les véhicules de tourisme, on fait généralement appel à trois groupes de languettes 9.

La fixation de celles-ci sur les plages 83 et les pattes 91 est réalisée à l'aide d'organes de fixation 84, usuellement des rivets, en variante des vis ou des boulons. Ici on ne voit pas le rivet 84 associé à la patte 91 car celle-ci est large circonférentiellement pour fixation d'un crochet de rappel 124 attelant la première rondelle Belleville 4 au plateau de pression 3 ; la fixation des crochets 124 (un par patte 91) étant réalisée à l'aide de rivets 125, en variante des vis ou des boulons

Plus précisément la première rondelle 4 s'appuie à sa périphérie externe sur un bossage annulaire 31, ici fractionné, que présente le plateau de pression 3 sur sa face dorsale 36.

Le bossage 31 est saillant axialement en direction du fond 80 du couvercle 8 et a une forme pointue avec un sommet arrondi pour contact local avec la périphérie externe de la première rondelle Belleville 4 pincée entre ledit bossage 31 et les crochets 124, ici métalliques et élastiques.

Ces crochets 124 présentent à leur extrémité une forme bombée pour contact ponctuel, en regard du bossage 31, avec ladite rondelle 4. Cette rondelle 4 est inclinée en direction du couvercle 8.

La deuxième rondelle Belleville, suivant une caractéristique de l'invention, s'appuie, ici à sa périphérie externe, sur le dispositif débrayeur de l'embrayage 7. Elle est inclinée en direction du plateau de pression 3 en sens inverse de la rondelle 4.

A cet effet ledit dispositif présente un appui annulaire 73. Cet appui 73 constitue un appui de manoeuvre de manière décrite ci-après.

Ici le dispositif débrayeur 7 est métallique et l'appui 73 est réalisé par emboutissage en étant de forme arrondie.

Les deux rondelles Belleville 4,6 ont ainsi une forme en V en étant en contact à leur périphérie interne avec le jonc annulaire 5 de transmission d'effort intercalé entre celles-ci.

Ces rondelles Belleville 4,6 sont bien entendu dimensionnées pour qu'un équilibre soit réalisé lorsque l'embrayage est en position embrayée (figure 1).

Avantageusement les rondelles 4,6 sont creusées, ici par formage, localement pour recevoir le jonc 5. La face externe de ces rondelles 4,6 est rainurée pour maintien d'une pince 50 en forme de U, dont les extrémités libres des branches sont d'orientation axiale. La pince 50 s'étend par son fond radialement en dessous des rondelles 4,6.

La pince 50, ici de forme annulaire, est élastique et serre élastiquement les rondelles au contact du jonc 5 en étant en contact par ses branches avec la face externe desdites rondelles. Cette pince peut être fractionnée en clips.

En fonction de l'inclinaison des rondelles 4,6 la pince s'ouvre ou se referme.

Le dispositif débrayeur 7 est propre à s'appuyer localement à sa périphérie externe sur un appui primaire de forme annulaire 71 formé par emboutissage à la périphérie externe du couvercle 8, ici en tôle emboutie. Ce couvercle présente au niveau de la périphérie interne de son fond 80 troué centralement un appui secondaire 72 de forme annulaire formé par emboutissage.

Le dispositif débrayeur 7 est propre à venir localement en contact sur cet appui primaire 71 formant appui de pivotement. L'appui primaire 71 est décalé axialement en direction du rebord 81 et du plateau de pression 3 par rapport à l'appui secondaire 72.

Ainsi en position embrayage engagé, le dispositif débrayeur s'appuie sur l'appui secondaire 72.

Suivant une caractéristique l'appui de manoeuvre 73 du dispositif débrayeur est implanté radialement entre les appuis 71,72. Bien entendu les appuis 71 à 73 peuvent être remplacés par des joncs annulaires, le couvercle 8 et le dispositif 7 étant alors creusés à cet effet.

Dans tous les cas les appuis 71,72 et 73 sont portés respectivement par le fond 80 du couvercle et le dispositif débrayeur.

On notera que la périphérie externe 75 du dispositif débrayeur 7, ici métallique, est décalée axialement par rapport à la partie principale 76 dudit dispositif 7 afin, en combinaison avec le décalage de l'appui primaire 71, de réduire l'encombrement axial. Ce décalage de la partie 75 est réalisé en emboutissant localement en 74 le dispositif débrayeur 7 et ce en direction du fond 80 du couvercle. Cet embouti 74 raccorde la partie périphérique 75 à l'appui 73 en sorte que la partie périphérique 75 se raccorde à la partie principale par une portion annulaire globalement en forme de S inversé. On notera que l'embouti 74 permet également de retenir radialement et de centrer la rondelle 6. L'embouti 74 est dirigé axialement en sens inverse par rapport à l'appui 73 et permet de raidir la zone s'étendant entre l'appui 73 et la rondelle 75.

Tout ceci est possible car, suivant une caractéristique de l'invention, le dispositif débrayeur 7 n'exerce pas de manière notable d'action élastique axialement (sa charge étant faible).

Ce dispositif débrayeur 7 est prévu pour contrecarrer et surmonter à volonté l'action élastique des rondelles Belleville 4,6 en vue de desserrer à volonté les garnitures de friction 20,21 et de la friction d'embrayage 2 d'entre le plateau de pression 3 et le plateau de réaction constitué par le volant 1 afin de désengager l'embrayage.

Les rondelles Belleville 4,6 permettent de serrer lesdites garnitures entre les plateaux 1,3 et constituent des moyens embrayeurs à action axiale sollicitant le plateau de pression 3 en direction opposée au fond 80, globalement d'orientation transversale, du couvercle 8. Le fond 80 est dirigé radialement vers l'axe de symétrie axial X-X de l'embrayage.

L'embrayage est ici du type poussé. Il faut donc agir en poussant sur l'extrémité interne de la partie principale 76 trouée centralement du dispositif débrayeur à l'aide d'une butée de débrayage 200, portée ici par le carter de la boîte de vitesses.

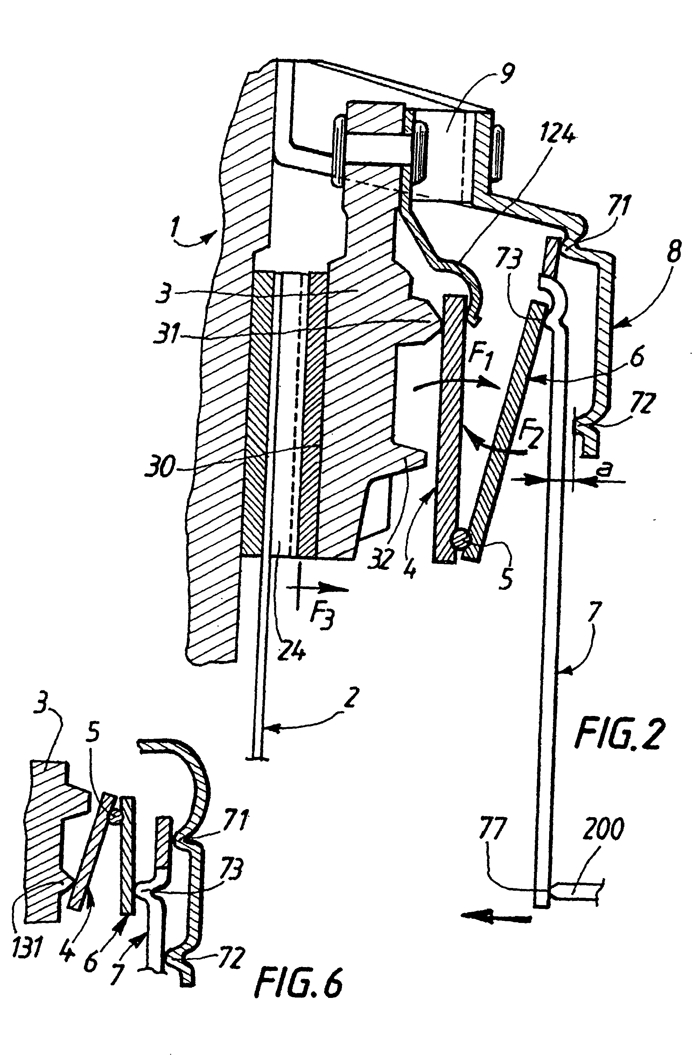

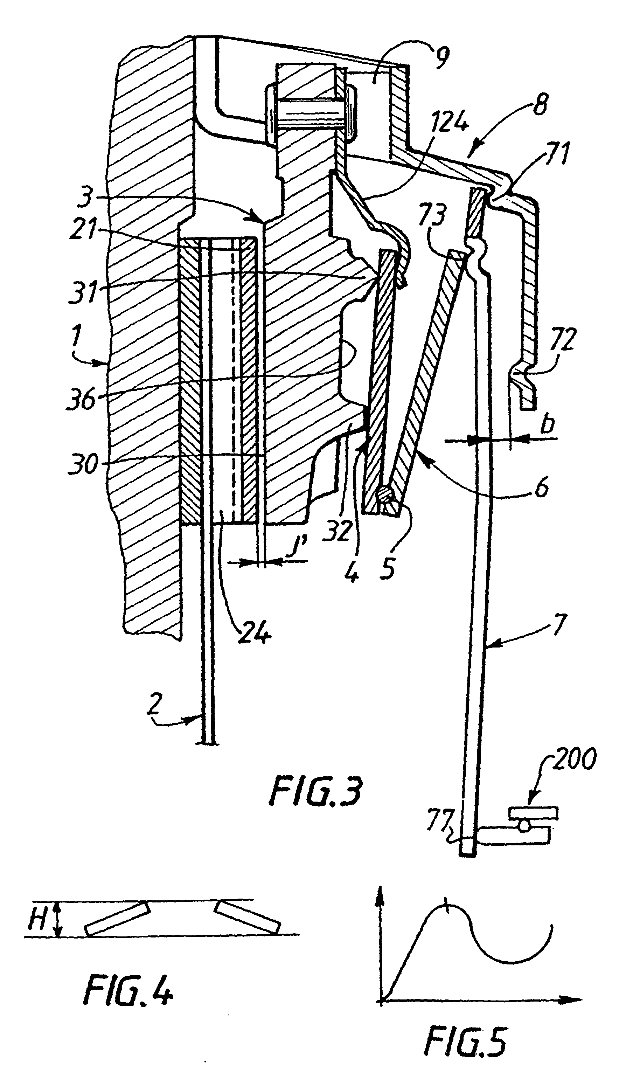

Ainsi dans la figure 1 l'embrayage est en position engagée (garnitures 20,21 serrées entre les plateaux 1,3), tandis qu'à la figure 2 la butée de débrayage 200 s'est déplacée vers la gauche pour désengager l'embrayage, le mouvement de la butée se poursuivant jusqu'à la position de la figure 3 dans laquelle l'embrayage est désengagé complètement (garnitures libérées).

En position embrayage engagé le dispositif débrayeur est au contact de l'appui secondaire 72 (jeu zéro), tandis que lors de la course de débrayage (passage de la figure 1 à la figure 2 puis à la figure 3), le jeu entre le dispositif 7 et l'appui 72 augmente, le dispositif débrayeur 7 pivotant autour de l'appui primaire 71.

Plus précisément, suivant une caractéristique de l'invention, la seconde rondelle Belleville 6 est une rondelle dite positive c'est-à-dire que lorsque la hauteur du tronc de cône (ou épaisseur totale) de la rondelle diminue, la charge fournie par ladite rondelle est croissante.

La première rondelle Belleville 4 est une rondelle dite négative c'est-à-dire que lorsque la hauteur du tronc de cône (ou épaisseur totale) de la rondelle diminue, la charge fournie par la rondelle diminue.

Plus précisément, en considérant la courbe caractéristique d'une rondelle Belleville, la zone d'utilisation de la rondelle positive s'étend globalement de zéro au maximum de la courbe, tandis que la zone d'utilisation de la rondelle négative s'étend globalement au delà du maximum précité comme décrit dans le document wo 97/19275 (notamment figure 4) auquel on pourra se reporter pour plus de précisions, notamment pour voir les variations de conicité des rondelles Belleville. Les rondelles Belleville 4,6 travaillent donc globalement de façon linéaire, la charge minimum exercée par la rondelle négative étant proche de zéro.

Suivant une caractéristique la rondelle Belleville positive a une action prépondérante par rapport à la rondelle Belleville négative 4. Elle est adaptée à déformer celle-ci, c'est-à-dire à l'aplatir. Sa charge maximum développée est par exemple supérieure en valeur absolue à la charge maximum développée par la rondelle Belleville négative. Ici la raideur de la rondelle positive 6 est plus élevée (plus grande) que la raideur de la rondelle négative 4 en valeur absolue.

Le jonc 5 assure la transmission des efforts entre les rondelles 4,6.

Le dispositif débrayeur 7 a une partie principale 76 en forme de doigts séparés par des fentes, cette partie 76 prolongeant la partie périphérique 75.

Ces doigts ont une plus grande longueur que les doigts d'un diaphragme classique. Ils peuvent être nervurés longitudinalement centralement.

La partie périphérique 75 relie entre eux les doigts et consiste en une simple rondelle avantageusement dotée de fentes radiales borgnes débouchant vers l'extérieur afin que cette rondelle n'exerce pas de charge ou une charge très faible.

On peut ainsi obtenir de grand bras de levier et diminuer la charge à appliquer en 77 (ligne de contact de la butée de débrayage) pour désengager l'embrayage.

En position embrayage engagé les deux rondelles Belleville 4,6, montées en série suivant une caractéristique de l'invention, sont en équilibre en tenant compte également de l'action exercée par les moyens élastiques de progressivité 24 et la force de rappel des languettes 9.

Suivant une caractéristique, les doigts de la partie principale 76 ont une grande longueur par rapport à la hauteur de la rondelle 75, par exemple la hauteur de la rondelle 75 et des emboutis 73,74 peut être telle que la distance entre les appuis primaire 71 et d'actionnement 73 soit le dixième de la distance entre l'appui primaire 71 et L'appui 77 pour la butée de débrayage.

Soit M la charge exercée par les rondelles Belleville sur l'appui 73 du dispositif débrayeur 7, en choisissant L2, (distance entre les appuis 71 et 77) et J (distance entre les appuis 71 et 73) on peut obtenir un rapport de bras de levier J/L2 de 1/10 en sorte que pour désengager l'embrayage il faut appliquer une charge dix fois moindre que la charge de serrage des rondelles Belleville entre les points 31 et 73.

Dans la position embrayage engagé, la position de l'appui 73 est fixe car, suivant une caractéristique de l'invention, le levier est en appui sur les appuis primaire 71 et secondaire 72 du couvercle. L'appui secondaire 72 permet donc de définir une position de référence pour le dispositif débrayeur 7.

Les extrémités des doigts du dispositif débrayeur occupent donc toujours la même position quelle que soit l'usure des garnitures de friction 20,21 et/ou des faces de friction 10,30. On n'a donc pas besoin d'un dispositif de rattrapage d'usure desdites garnitures et/ou faces en sorte que la solution est économique.

Dans cette position les moyens de progressivité 24 sont écrasés au maximum. On notera que la partie 76 présente un pli pour réduction de l'encombrement axial.

En cas d'usures le plateau de pression 3 se déplace vers le volant 1 et jusqu'à ce qu'un nouvel équilibre soit obtenu au niveau des rondelles 4,6.

En effet la distance entre le bossage 31 et l'appui 73 alors fixe augmente en sorte que le V délimité par les rondelles Belleville 4,6 s'ouvre un peu plus. La charge de la première rondelle Belleville 4 exercée sur le jonc 5 tend à augmenter, tandis que la charge de la deuxième rondelle Belleville 6 exercée sur le jonc 5 tend à diminuer ; un nouvel équilibre est ainsi atteint.

Lors de l'opération de débrayage, en poussant axialement à l'aide de la butée de débrayage 200 en 77 sur l'extrémité interne des doigts de la partie 76, le dispositif 7 quitte son appui secondaire 72 et un jeu a apparaît (figure 2).

L'appui 73 tend à se rapprocher du bossage 31, tandis que les moyens élastiques de progressivité 24 se détendent et déplacent le plateau de pression 3 dans le sens de la flèche F3 en direction du fond 80 du couvercle 8. La distance entre le bossage 31 et l'appui 73 tend à diminuer, la seconde rondelle Belleville 6 se déplaçant suivant la flèche F2 et la première rondelle Belleville 4 suivant la flèche F1 (voir figure 2). La rondelle positive 6 s'ouvre, tandis que la rondelle négative 4 se referme.

Du fait des raideurs des rondelles 4,6 et des moyens de progressivité 24, un nouvel équilibre se crée avec diminution de la charge exercée par les rondelles Belleville sur le plateau de pression, le V délimité par les rondelles Belleville 4,6 se refermant.

Au fur et à mesure de la course de débrayage, des équilibres instantanés se créent avec modulation de la charge exercée sur le plateau de pression 3.

En effet pour un même déplacement en valeur absolue, compte tenu de la raideur plus élevée de la rondelle 6, la charge de la rondelle 4 décroît moins rapidement que celle de la rondelle 6, en sorte qu'initialement la rondelle positive 6 écrase la rondelle négative 4 jusqu'à ce que, par réaction de la rondelle négative 4, un nouvel équilibre se crée du fait que la charge de la rondelle positive diminue plus rapidement.

La rondelle Belleville positive s'ouvre moins que ne se referme la rondelle Belleville négative.

Lorsque la butée de débrayage 200 a effectué sa course maximum (figure 3) le jeu entre l'appui secondaire 72 et le dispositif débrayeur 7 augmente et prend la valeur b. La première rondelle Belleville 4 se referme, la hauteur de son tronc de cône diminue, tandis que la seconde rondelle Belleville s'ouvre, la hauteur de son tronc de cône augmentant.

Les charges des deux rondelles 4,6 diminuent fortement du fait que la première rondelle 4 est négative et la seconde rondelle positive.

Ces rondelles étant alors fortement déchargées, les languettes 9 assurent alors un rappel du plateau 3 vers le fond 80 du couvercle, sachant que l'effort de rappel exercé par les languettes 9 est très inférieur à celui des moyens élastiques de progressivité 24 qui sont alors détendues. Un jeu J' apparaît donc entre le plateau de pression 3 et les garnitures 20,21.

On notera qu'une butée annulaire 32 est formée sur la face dorsale 36 du plateau de pression 2, ici par moulage. Cette butée 32, en liaison avec les crochets 124, empêche la première rondelle Belleville 4 de se retourner ce qui entraînerait une augmentation de la charge exercée sur le plateau de pression et un déséquilibrage voire même un réembrayage.

Ainsi le mécanisme d'embrayage est doté de moyens d'antiretournement de la rondelle Belleville négative. Ces moyens peuvent avoir une autre forme. La première rondelle 4 est donc montée sous précontrainte.

Bien entendu par sécurité on peut prévoir une butée pour limiter la course du dispositif débrayeur 7 de façon à éviter que la seconde rondelle 6 se recharge du fait que la première rondelle 4 est en contact avec l'appui 32.

Ainsi le dispositif 7 peut porter des colonnettes traversant des ouvertures pratiquées dans le fond 80 du couvercle 8. La tête des colonnettes vient alors en contact avec la face du fond 80 tournée à l'opposé du plateau de pression 3.

Lors du réembrayage de l'embrayage (passage de la figure 3 à la figure 2 puis à la figure 1) on déséquilibre dans l'autre sens axial le système ; l'ensemble des deux rondelles Belleville va retrouver un nouvel équilibre quand le plateau de pression 3 revient en contact avec la garniture de friction 21.

On comprime ainsi les moyens élastiques 24 jusqu'à revenir à la position de la figure 1.

Ainsi grâce à l'invention dans la position embrayée, le dispositif 7 a toujours la même position quelle que soit le degré d'usure des garnitures de friction et/ou des faces de friction.

Grâce aux crochets 124 la rondelle Belleville négative 4 est en permanence en contact avec le bossage 31 en sorte que les opérations d'embrayage et de débrayage sont réalisées de manière sûre et fiable.

Grâce au grand bras de levier, on obtient un effort de débrayage faible au niveau de la butée de débrayage 200.

Ainsi qu'on l'aura compris, le jonc 5 constitue un moyen de transmission d'effort de forme arrondie. En variante on peut remplacer ce jonc par un embouti de forme arrondie pratiqué à la périphérie interne de l'une des rondelles Belleville 4,6.

Cet embouti a par exemple une forme similaire à celui des appuis 71 à 73. Les moyens de transmission d'effort peuvent donc avoir des formes différentes.

Le plateau de pression 3 présente frontalement une face de friction 30 pour coopération avec la friction d'embrayage. La face dorsale 36 du plateau de pression est conformée pour offrir un appui (le bossage 31) à la rondelle Belleville négative 4 et former une butée 32 limitant l'inclinaison de ladite rondelle 4.

Cette butée 32 obtenue par moulage est implantée radialement en dessous du bossage 31 en ayant une hauteur inférieure à celui-ci.

Les moyens élastiques embrayeurs (les rondelles Belleville 4,6) et le dispositif débrayeur 7 sont intercalés entre le couvercle 8 et le plateau de pression 3 pour former avec ceux-ci, en combinaison avec les languettes 9 et les crochets 124, un ensemble unitaire manipulable et transportable appelé mécanisme d'embrayage.

C'est ce mécanisme d'embrayage qui est rapporté sur le volant d'entraînement en rotation 2.

On notera qu'ici le couvercle entoure le plateau de pression, les rondelles Belleville 4,6 et le dispositif débrayeur 7.

Ici l'appui primaire 71 est disposé le plus haut possible, au niveau de la zone de raccordement du fond 80 avec la jupe 82 du couvercle 8.

Bien entendu on peut déplacer cet appui radialement vers l'intérieur. L'appui secondaire 72 peut être formé directement par la périphérie interne du fond 80.

En variante on peut donner une faible élasticité à la rondelle 75 pour améliorer le confort au niveau de la pédale de commande de la butée de débrayage et exercer une action de rappel.

Dans la description ci-dessus les rondelles Belleville ont des charges voisines. Bien entendu on peut surdimensionner la rondelle Belleville positive par rapport à la rondelle Belleville négative pour avoir une course de débrayage moindre et un débrayage plus rapide, sachant que les rondelles Belleville sont en équilibre pour la position embrayage engagé.

On peut donner plus de raideur à la rondelle Belleville positive en augmentant par exemple son épaisseur par rapport à la rondelle Belleville négative. On peut jouer sur l'angle du tronc de cône des rondelles Belleville ou tout autre moyen pour que la rondelle Belleville positive soit prépondérante.

En variante les rondelles Bellevilles 4 et 5 peuvent comporter des doigts à leur périphérie interne ou externe. Bien entendu on peut inverser les structures.

Ainsi (figure 6) la rondelle négative 4 est en contact à sa périphérie interne avec un bossage fractionné 131 d plateau de pression 3, tandis que la rondelle positive 6 s'appuie à sa périphérie interne sur l'appui de manoeuvre 73 du dispositif débrayeur 7, lesdites rondelles étant inclinées en sens inverse.

Des moyens de transmission d'effort le jonc 5, sont interposée entre les périphéries externes des rondelles Bellevilles.

Ainsi des moyens de transmission d'effort sont dans tous les cas intercalés entre les périphéries adjacentes des rondelles Bellevilles.

De même dans tous les cas la première rondelle Belleville 4 est adjacente au plateau de pression 3, tandis que la seconde rondelle Belleville est adjacente au dispositif débrayeur 7. En variante la seconde rondelle Belleville positive 6 peut être remplacée par une rondelle élastique à action axiale ayant la même courbe caractéristique, telle que par exemple une rondelle élastique ondulée axialement.

Ainsi par simplicité la rondelle élastique adjacente au dispositif débrayeur est dite seconde rondelle Belleville.

Par contre la rondelle élastique adjacente au plateau de pression est une rondelle du type Belleville pour obtenir la courbe caractéristique souhaitée.

Bien entendu le couvercle 8 peu avoir une forme moins creuse. Il peut être même de forme plate. Dans ce cas, de manière connue, le volant 2 présente à sa périphérie externe une jupe annulaire d'orientation axiale.

## Revendications

1. Mécanisme d'embrayage pour embrayage à friction, comportant un couvercle (8) avec un fond (80) d'orientation transversale et des moyens de fixation (81) pour fixation du mécanisme d'embrayage sur un volant d'entraînement (1) en rotation, un plateau de pression (3) présentant frontalement une face de friction (30) pour coopération avec une friction d'embrayage (2) et dorsalement une face dorsale (36) au regard du fond (80) du couvercle (8), des languettes élastiques (9) pour liaison en rotation, avec mobilité axiale, du plateau de pression (3) avec le couvercle (8), et interposés entre la face dorsale du plateau de pression (3) et le fond (80) du couvercle (8), d'une part, des moyens élastiques débrayeurs à action axiale (4 à 6) sollicitant axialement le plateau de pression (8) en direction opposée du fond (80) du couvercle (8) et, d'autre part, un dispositif débrayeur (7) de forme annulaire pour contrecarrer à volonté l'action desdits moyens élastiques embrayeurs (4 à 6), **caractérisé en ce que** lesdits moyens élastiques embrayeurs (4,6) comportent deux rondelles Belleville (4,6) montées en série entre la face dorsale (36) du plateau de pression (3) et un appui de manoeuvre (73) porté par le dispositif débrayeur (7), à savoir une première rondelle Belleville (4) adjacente au plateau de pression (3) et une seconde rondelle Belleville (6) adjacente au dispositif débrayeur (7), et **en ce que** le dispositif débrayeur (7) est monté à sa périphérie externe de manière pivotante sur un appui primaire (71) porté par le fond (80) du couvercle (8) radialement au-dessus de l'appui de manoeuvre (73), lui-même implanté radialement au-dessus d'un appui secondaire (72) porté par le fond (80) du couvercle (8) pour contact avec le dispositif débrayeur (7) et définition d'une position de référence pour celui-ci.

2. Mécanisme selon la revendication 1, **caractérisé en ce que** la première rondelle Belleville (4), est en contact à sa périphérie externe avec le plateau de pression (3), tandis que la seconde rondelle Belleville (6), s'appuie à sa périphérie externe sur l'appui de manoeuvre (73), lesdites rondelles (4,6) étant inclinées en sens inverse.

3. Mécanisme selon la revendication 1, **caractérisé en ce que** la première rondelle Belleville (4), est en contact à sa périphérie interne avec le plateau de pression (3), tandis que la seconde rondelle Belleville (6), s'appuie à sa périphérie interne sur l'appui de manoeuvre (73), lesdites rondelles (4,6) étant inclinées en sens inverse.

4. Mécanisme selon la revendication 1, **caractérisé en ce que** la première rondelle Belleville (4) est dite rondelle Belleville (4) négative, sa charge fournie diminuant lorsque la hauteur de son tronc de cône diminue et **en ce que** la seconde rondelle Belleville (6) est dite rondelle Belleville positive, sa charge fournie augmentant lorsque la hauteur de son tronc de cône diminue.

5. Mécanisme selon la revendication 4, **caractérisé en ce que** la rondelle Belleville positive (6) est choisie pour exercer une action prépondérante par rapport à la rondelle Belleville négative (4).

6. Mécanisme selon la revendication 5, **caractérisé en ce que** la raideur de la rondelle Belleville positive (6) est supérieure à la raideur de la rondelle Belleville négative (4).

7. Mécanisme selon la revendication 5, **caractérisé en ce qu'**en valeur absolue la rondelle Belleville positive (6) développe une charge maximum supérieure à celle développée par la rondelle Belleville négative (4).

8. Mécanisme selon la revendication 1, **caractérisé en ce que** les rondelles Belleville (4,6) ont des charges voisines.

9. Mécanisme selon la revendication 1, **caractérisé en ce que** des moyens de transmission d'effort (5) sont intercalés entre les périphéries adjacentes des rondelles Belleville.

10. Mécanisme selon la revendication 9, **caractérisé en ce que** les moyens de transmission d'effort (5) consistent en un jonc.

11. Mécanisme selon la revendication 10, **caractérisé en ce que** les rondelles Belleville sont maintenues en contact avec le jonc de transmission d'effort (5) par une pince élastique (50), éventuellement fractionnée, venant en prise avec les faces externes des rondelles Belleville tournées à l'opposé du jonc de transmission d'effort (5).

12. Mécanisme selon la revendication 1, **caractérisé en ce que** le dispositif débrayeur (7) comporte une partie périphérique (75) de forme annulaire prolongée par une partie principale (76) fragmentée en doigts radiaux par des fentes et **en ce que** l'appui de manoeuvre (73) est formé par emboutissage et se raccorde à la périphérie interne de la partie périphérique annulaire (75) du dispositif débrayeur (7) par un embouti (74) dirigé axialement en sens inverse de l'appui de manoeuvre (73).

13. Mécanisme selon la revendication 12, **caractérisé en ce que** la partie périphérique (75) du dispositif débrayeur (7) est décalée axialement par rapport à sa partie principale.

14. Mécanisme selon la revendication 1, **caractérisé en ce que** l'appui primaire (71) est décalé axialement par rapport à l'appui secondaire (72).

15. Mécanisme selon la revendication 1, **caractérisé en ce que** le plateau de pression (3) présente dorsalement un bossage (31) pour appui de la périphérie externe de la rondelle Belleville (4) concernée et une butée (32) située radialement en-dessous dudit bossage pour limiter l'inclinaison de ladite rondelle Belleville.

16. Mécanisme selon la revendication 15, **caractérisé en ce que** ladite rondelle Belleville est soumise à l'action de crochets (124) élastiques fixés au plateau de pression et **en ce que** la périphérie externe de ladite rondelle Belleville est pincée entre le bossage du plateau de pression et ledit crochet.

## Patentansprüche

1. Kupplungsmechanismus für eine Reibungskupplung, umfassend einen Deckel (8) mit einem quer ausgerichteten Boden (80) und Befestigungsmitteln (81) zur Befestigung des Kupplungsmechanismus an einem Drehantriebsschwungrad (1), eine Druckplatte (3), die stirnseitig eine Reibfläche (30) für das Zusammenwirken mit einer Reibungskupplungsscheibe (2) und rückseitig eine rückseitige Fläche (36) gegenüber dem Boden (80) des Deckels (8) ausweist, elastische Zungen (9) für die drehfeste, axial bewegliche Verbindung der Druckplatte (3) mit dem Deckel (8) und, eingefügt zwischen der rückseitigen Fläche der Druckplatte (3) und dem Boden (80) des Deckels (8), einerseits axial wirksame elastische Einrückmittet (4 bis 6), welche die Druckplatte (8) axial in der zum Boden (80) des Deckels (8) entgegengesetzten Richtung beaufschlagen, und andererseits eine ringförmige Ausrückvorrichtung (7), um der Wirkung der besagten elastischen Einrückmittel (4, 6) nach Belieben entgegenzuwirken, **dadurch gekennzeichnet, dass** die besagten elastischen Einrückmittel (4, 6) zwei Tellerfedern (4, 6) umfassen, die zwischen der rückseitigen Fläche (36) der Druckplatte (3) und einer an der Ausrückvorrichtung (7) angebrachten Betätigungsauflage (73) in Reihe eingebaut sind, und zwar eine der Druckplatte (3) zugekehrte erste Tellerfeder (4) und eine der Ausrückvorrichtung (7) zugekehrte zweite Tellerfeder (7). und dass die Ausrückvorrichtung (7) an ihrem äußeren Umfang kippbar auf einer Primärauflage (71) gelagert ist, die am Boden (80) des Deckels (8) radial außerhalb der Betätigungsauflage (73) angebracht ist, die ihrerseits radial außerhalb einer am Boden (80) des Deckels (8) angebrachten Sekundärauflage (72) angeordnet ist, um den Kontakt mit der Ausrückvorrichtung (7) und die Definition einer Bezugsposition für diese Vorrichtung herbeizuführen.

2. Mechanismus nach Anspruch 1, **dadurch gekennzeichnet, dass** sich die erste Tellerfeder (4) an ihrem äußeren Umfang mit der Druckplatte (3) in Kontakt befindet, während die zweite Tellerfeder (6) an ihrem äußeren Umfang an der Betätigungsauflage (73) anliegt, wobei die besagten Tellerfedern (4, 6) in entgegengesetzter Richtung geneigt sind.

3. Mechanismus nach Anspruch 1, **dadurch gekennzeichnet, dass** sich die erste Tellerfeder (4) an ihrem inneren Umfang mit der Druckplatte (3) in Kontakt befindet, während die zweite Tellerfeder (6) an ihrem inneren Umfang an der Betätigungsauflage (3) anliegt, wobei die besagten Tellerfedem (4, 6) in entgegengesetzter Richtung geneigt sind.

4. Mechanismus nach Anspruch 1, **dadurch,gekennzeichnet, dass** die erste Tellerfeder (4) als negative Teiterfeder (4) bezeichnet wird, wobei die durch sie abgegebene Betastung abnimmt, wenn sich die Höhe ihres Kegelstumpfes verringert, und dass die zweite Tellerfeder (6) als positive Tellerfeder bezeichnet wird, wobei die durch sie abgegebene Belastung zunimmt, wenn sich die Höhe ihres Kegelstumpfes verringert.

5. Mechanismus nach Anspruch 4, **dadurch gekennzeichnet, dass** die positive Tellerfeder (6) so gewählt wird, dass sie im Verhältnis zur negativen Tellerfeder (4) eine dominierende Wirkung ausübt.

6. Mechanismus nach Anspruch 5, **dadurch gekennzeichnet, dass** die Steifigkeit der positiven Tellerfeder (6) größer als die Steifigkeit der negativen Tellerfeder (4) ist.

7. Mechanismus nach Anspruch 5, **dadurch gekennzeichnet, dass** die positive Tellerfeder (6), bezogen auf den Absolutwert, eine maximale Belastung entwickelt, die größer als die durch die negative Tellerfeder (4) entwickelte maximale Belastung ist.

8. Mechanismus nach Anspruch 1, **dadurch gekennzeichnet, dass** die Tellerfedem (4, 6) benachbarte Belastungen aufweisen.

9. Mechanismus nach Anspruch 1, **dadurch gekennzeichnet, dass** zwischen den einander zugekehrten Umfängen der Teilerfedern Kraftübertragungsmittel (5) eingefügt sind.

10. Mechanismus nach Anspruch 9, **dadurch gekennzeichnet, dass** die Kraftübertragungsmittel (5) aus einem Ring bestehen.

11. Mechanismus nach Anspruch 10, **dadurch gekennzeichnet, dass** die Tellerfedem mit dem Kraftübertragungsring (5) durch eine, gegebenenfalls unterteilte, elastische Klemme (50) in Kontakt gehalten werden, die mit den entgegengesetzt zum kraftübertragungsring (5) gerichteten Außenflächen der Teilerfedem in Eingriff kommt

12. Mechanismus nach Anspruch 1, **dadurch gekennzeichnet, dass** die Ausrückvorrichtung (7) einen ringförmigen Umfangsteil (75) umfasst, der durch einen durch Schlitze in radiale Finger unterteilten Hauptteil (76) verlängert wird, und dass die Betätigungsauflage (73) durch Tiefziehumformen gebildet wird und sich an den inneren Umfang des ringförmigen Umfangsteils (75) der Ausrückvorrichtung (7) durch eine axial entgegengesetzt zur Betätigungsauflage (73) gerichtete Ausbuchtung (74) anschließt.

13. Mechanismus nach Anspruch 12, **dadurch gekennzeichnet, dass** der Umfangsteil (75) der Ausrückvorrichtung (7) im Verhältnis zu ihrem Hauptteil axial versetzt ist.

14. Mechanismus nach Anspruch 1, **dadurch gekennzeichnet, dass** die Primärauflage (71) im Verhältnis zur Sekundärauflage (72) axial versetzt ist.

15. Mechanismus nach Anspruch 1, **dadurch gekennzeichnet, dass** die Druckplatte (3) rückseitig einen Vorsprung (31) für die Auflage des äußeren Umfangs der betreffenden Tellerfeder (4) und einen radial innerhalb des besagten Vorsprungs befindlichen Anschlag (32) zur Begrenzung der Neigung der besagten Tellerfeder aufweist.

16. Mechanismus nach Anspruch 15, **dadurch gekennzeichnet, dass** die besagte Tellerfeder der Wirkung von an der Druckplatte befestigten elastischen Haken (124) ausgesetzt ist und dass der äußere Umfang der besagten Tellerfeder zwischen dem Vorsprung der Druckplatte und dem besagten Haken eingeklemmt ist.

## Claims

1. Clutch mechanism for a friction clutch, comprising a cover (8) with a transversely oriented bottom (80) and fixing means (81) for fixing the clutch mechanism to a rotationally driving flywheel (1), a pressure plate (3) having at the front a friction face (30) for cooperation with a clutch friction device (2) and on the back a dorsal face (36) facing the bottom (80) of the cover (8), elastic tongues (9) for rotationally connecting, with axial mobility, the pressure plate (3) with the cover (8), and interposed between the dorsal face of the pressure plate (3) and the bottom (80) of the cover (8), firstly axially acting elastic disengagement means (4 to 6) axially forcing the pressure plate (8) in the direction opposite to the bottom (80) of the cover (8) and secondly an annular-shaped disengagement device (7) for intentionally counteracting the action of the said elastic engagement means (4 to 6), **characterised in that** the said elastic engagement means (4, 6) comprise two Belleville washers (4, 6) mounted in series between the dorsal face (36) of the pressure plate (3) and a manoeuvring abutment (73) carried by the disengagement device (7), namely a first Belleville washer (4) adjacent to the pressure plate (3) and a second Belleville washer (6) adjacent to the disengagement device (7), and **in that** the disengagement device (7) is mounted at its external periphery so as to pivot on a primary abutment (71) carried by the bottom (80) of the cover (8) radially above the manoeuvring abutment (73), itself located radially above the secondary abutment (72) carried by the bottom (80) of the cover (8) for contact with the disengagement device (7) and definition of a reference position for the latter.

2. Mechanism according to Claim 1, **characterised in that** the first Belleville washer (4) is in contact at its external periphery with the pressure plate (3) whilst the second Belleville washer (6) bears at its external periphery on the manoeuvring abutment (73), the said washers (4, 6) being inclined in opposite directions.

3. Mechanism according to Claim 1, **characterised in that** the first Belleville washer (4) is in contact at its internal periphery with the pressure plate (3) whilst the second Belleville washer (6) bears at its internal periphery on the manoeuvring abutment (73), the said washers (4, 6) being inclined in opposite directions.

4. Mechanism according to Claim 1, **characterised in that** the first Belleville washer (4) is referred to as the negative Belleville washer (4), its load supplied reducing as the height of its truncated cone decreases, and **in that** the second Belleville washer (6) is referred to as the positive Belleville washer, its load supplied increasing as the height of its truncated cone decreases.

5. Mechanism according to Claim 4, **characterised in that** the positive Belleville washer (6) is chosen so as to exert a preponderant action with respect to the negative Belleville washer (4).

6. Mechanism according to Claim 5, **characterised in that** the stiffness of the positive Belleville washer (6) is greater than the stiffness of the negative Belleville washer (4).

7. Mechanism according to Claim 5, **characterised in that**, in absolute value, the positive Belleville washer (6) develops a maximum load greater than that developed by the negative Belleville washer (4).

8. Mechanism according to Claim 1, **characterised in that** the Belleville washers (4, 6) have loads which are close to each other.

9. Mechanism according to Claim 1, **characterised in that** force transmission means (5) are interposed between the adjacent peripheries of the Belleville washers.

10. Mechanism according to Claim 9, **characterised in that** the force transmission means (5) consist of a spring ring.

11. Mechanism according to Claim 10, **characterised in that** the Belleville washers are maintained in contact with the force transmission spring ring (5) by an elastic clamp (50), possibly divided, coming into engagement with the external faces of the Belleville washers turned in the opposite direction to the force transmission spring ring (5).

12. Mechanism according to Claim 1, **characterised in that** the disengagement device (7) comprises an annular-shaped peripheral part (75) extended by a main part (76) divided into radial fingers by slots and **in that** the manoeuvring abutment (73) is formed by pressing and is connected to the internal periphery of the annular peripheral part (75) of the disengagement device (7) by a dished part (74) directed axially in the opposite direction to the manoeuvring abutment (73).

13. Mechanism according to Claim 12, **characterised in that** the peripheral part (75) of the disengagement device (7) is offset axially with respect to its main part.

14. Mechanism according to Claim 1, **characterised in that** the primary abutment (71) is offset axially with respect to the secondary abutment (72).

15. Mechanism according to Claim 1, **characterised in that** the pressure plate (3) has on the back a protrusion (31) for abutment of the external periphery of the Belleville washer concerned (4) and a stop (32) situated radially below the said protrusion in order to limit the inclination of the said Belleville washer.

16. Mechanism according to Claim 15, **characterised in that** the said Belleville washer is subjected to the action of elastic hooks (124) fixed to the pressure plate and **in that** the external periphery of the said Belleville washer is gripped between the protrusion on the pressure plate and the said hook.
